(19) Europäisches Patentamt / European Patent Office / Office européen des brevets

(11) **EP 3 001 230 B1**

(12) **FASCICULE DE BREVET EUROPEEN**

(45) Date de publication et mention de la délivrance du brevet:
**22.03.2017 Bulletin 2017/12**

(21) Numéro de dépôt: **15186780.1**

(22) Date de dépôt: **25.09.2015**

(51) Int Cl.:
*G02B 6/10* *(2006.01)*    *G02B 6/42* *(2006.01)*

(54) **COUPLEUR OPTIQUE INTÉGRÉ SUR UN SUBSTRAT ET COMPRENANT TROIS ELEMENTS**

OPTOKOPPLER, DER AUF EINEM SUBSTRAT INTEGRIERT IST UND DREI ELEMENTE UMFASST

OPTICAL COUPLER INTEGRATED ON A SUBSTRATE AND COMPRISING THREE ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2014 FR 1459050**

(43) Date de publication de la demande:
**30.03.2016 Bulletin 2016/13**

(73) Titulaire: **Commissariat à l'Énergie Atomique et aux Énergies Alternatives 75015 Paris (FR)**

(72) Inventeurs:
• **FAVREAU, Julien**
  **38170 SEYSSINET-PARISET (FR)**
• **BOUTAMI, Salim**
  **38100 GRENOBLE (FR)**
• **BRUN, Mickaël**
  **38320 EYBENS (FR)**

(74) Mandataire: **Brevalex**
  **56, Boulevard de l'Embouchure**
  **B.P. 27519**
  **31075 Toulouse Cedex 2 (FR)**

(56) Documents cités:
  **US-A1- 2004 179 806    US-A1- 2004 218 868**

## Description

## DOMAINE TECHNIQUE

La présente invention appartient au domaine de la photonique intégrée, permettant de réaliser des dispositifs miniaturisés de traitement de la lumière, dans lesquels des dispositifs optiques et électroniques sont intégrés ensemble sur un même substrat.

L'invention concerne plus particulièrement le domaine des coupleurs destinés à coupler optiquement un laser et un guide d'onde intégrés sur un même substrat.

## ÉTAT DE LA TECHNIQUE ANTÉRIEURE

Dans ce domaine de la photonique, on ne connaît pas à ce jour de moyen suffisamment efficace pour réaliser une source lumineuse dans le matériau du substrat, c'est pourquoi on préfère reporter une source lumineuse sur le substrat, et coupler optiquement cette source avec un guide d'onde faisant partie d'un circuit photonique réalisé dans le substrat.

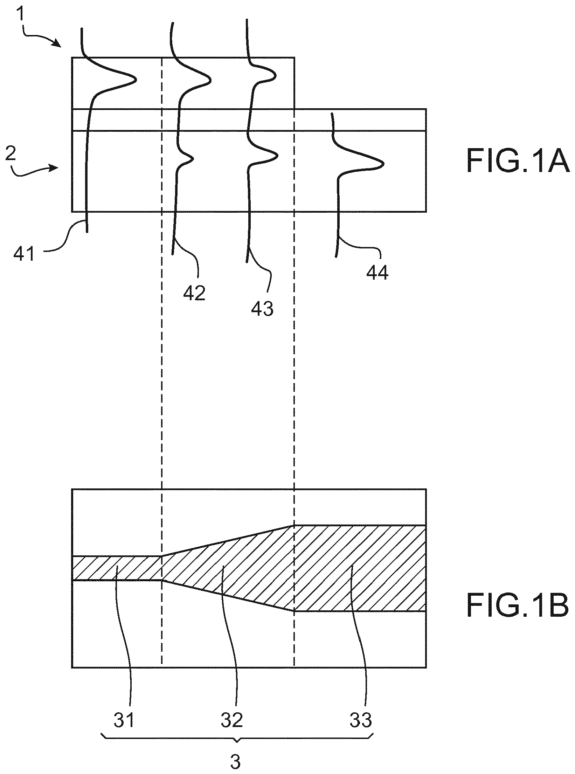

Un tel couplage est par exemple mis en oeuvre dans le domaine des télécommunications optiques, pour coupler un faisceau lumineux à 1550 nm. Un exemple d'un système mettant en oeuvre un tel couplage est illustré sur les figures 1A et 1B, respectivement selon une vue de profil et une vue en coupe.

Le laser 1 est en matériau III-V, c'est-à-dire formé d'au moins un élément de la colonne III et au moins un élément de la colonne V du tableau périodique des éléments. Le laser 1 est collé au-dessus d'un substrat 2 dans lequel s'étend un guide d'onde présentant un coeur en silicium (Si), entouré directement par une gaine en silice ($SiO_2$) Une fine couche de silice est intercalée entre le laser 1 et le substrat 2, et sert d'interface de collage moléculaire entre le laser et le substrat, tout en étant assez fine pour autoriser un transfert du mode du premier vers le second.

Le laser et le guide d'onde étant formés de matériaux d'indices optiques différents, il est nécessaire d'intercaler entre eux un coupleur optique.

L'ensemble constitué par le coupleur optique et le guide d'onde forme un élément de guidage 3 comprenant un coeur en silicium, entouré directement par une gaine en silice. Le système est représenté en figure 1B, selon une coupe passant par cet élément de guidage 3 (en hachures), et parallèle au plan de la face du substrat recevant le laser 1.

Dans une première région 31, l'élément de guidage présente une largeur réduite, et l'énergie produite par le laser 1 reste confinée dans celui-ci. Une deuxième région 32 de l'élément de guidage présente une largeur progressivement croissante et forme le coupleur optique. Le coupleur optique peut être nommé « taper », en référence à sa forme affinée. Une troisième région 33 de l'élément de guidage présente une largeur constante et forme le guide d'onde.

Grâce à sa largeur progressivement croissante, le coupleur optique réalise une transition de mode progressive du laser 1 vers le guide d'onde 33. En d'autres termes, une partie de l'énergie produite par le laser 1 est transférée au guide d'onde 33. La transition de mode est représentée de façon schématique par la série de courbes 41 à 44, illustrant la répartition d'intensité lumineuse dans le laser et le substrat.

Un tel coupleur présente de bonnes performances pour un laser émettant à 1550 nm. Cependant, il n'est pas possible d'utiliser ce même coupleur avec un laser émettant à d'autres longueurs d'onde, notamment supérieures à 2 $\mu$m. En effet, à ces longueurs d'onde, la silice est fortement absorbante. Il est donc impossible d'utiliser un guide d'onde en silice. Le coupleur étant adapté à un guide d'onde en silice, il n'est pas adapté non plus à de telles longueurs d'onde.

On connaît dans l'art antérieur le document US 2004/0218868 A1, qui décrit un coupleur optique pour coupler une unique voie d'entrée avec deux voies de sortie. Le guide d'onde formant la voie d'entrée s'étend jusqu'entre les deux guides d'onde formant les voies de sortie, séparé de ces derniers par un isolant électrique. L'isolant électrique est un matériau bas indice, et forme également la gaine des trois guides d'onde. Le couplage optique mis en oeuvre est un couplage par évanescence.

Un objectif de la présente invention est de proposer un coupleur optique, destiné à coupler efficacement un laser et un guide d'onde, quelle que soit la longueur d'onde d'émission dudit laser.

En particulier, un but de la présente invention est de proposer un coupleur optique, destiné à coupler efficacement un laser et un guide d'onde, le laser émettant à une longueur d'onde supérieure à 2 $\mu$m, typiquement comprise entre 2 et 10 $\mu$m, en particulier entre 3 et 10 $\mu$m et plus particulièrement entre 4 et 10 $\mu$m.

## EXPOSÉ DE L'INVENTION

Cet objectif est atteint au moyen d'un coupleur optique intégré sur un substrat, destiné à coupler optiquement un laser et un guide d'onde, le coupleur optique comprenant :

- un élément externe, présentant une base à partir de laquelle s'étendent deux bras séparés par une encoche, ladite encoche étant délimitée latéralement par deux premières parois d'écartement décroissant en direction du fond de l'encoche ;
- un élément central, situé dans l'encoche, délimité latéralement par deux deuxièmes parois, et présentant une première région où lesdites deux deuxièmes parois sont en contact direct avec lesdites deux premières parois jusqu'au fond de l'encoche ; et
- un élément intermédiaire, s'étendant entre l'élément externe et l'élément central, directement entre une première paroi et une deuxième paroi, là où une première paroi n'est pas en contact direct avec une deuxième paroi ;

l'indice optique de l'élément central étant supérieur à l'indice optique de l'élément intermédiaire, lui-même supérieur à l'indice optique de la base de l'élément externe.

Avantageusement, l'élément intermédiaire s'étend également, à l'intérieur de l'encoche, directement sur une face supérieure et sur une face inférieure de l'élément central.

L'élément central peut être en germanium ou en un alliage de germanium et de silicium.

De même, l'élément intermédiaire peut être en silicium, ou en un alliage de germanium et de silicium.

Enfin, l'élément externe peut comprendre de la silice, de l'oxyde d'aluminium ou du nitrure d'aluminium ou un gaz tel que de l'air ou du vide.

Plus particulièrement, on peut distinguer deux cas : un cas dans lequel l'élément externe ne comprend ni gaz, ni vide, et un cas dans lequel l'élément externe comprend un gaz ou du vide.

Dans le premier cas, l'élément externe peut être entièrement constitué de matériau solide. Il peut être entièrement constitué du même matériau solide, par exemple de la silice, de l'oxyde d'aluminium ou du nitrure d'aluminium. De préférence, il comprend localement des plots constitués d'un autre matériau solide. Ces plots permettent d'améliorer une conductivité thermique, comme détaillé dans la suite. En présence de plots, l'indice optique de la base de l'élément externe est un indice optique moyen.

En variante, l'élément externe comprend un matériau non solide, en particulier le vide ou un gaz tel que l'air. En d'autres termes, il est alors constitué d'une enveloppe enfermant un gaz ou le vide. Un avantage de cette variante est que l'on obtient des indices optiques bien plus faibles.

En pratique, le coupleur optique est formé dans une couche de matériau solide. La fabrication de l'élément externe comprend la réalisation d'un logement dans cette couche de matériau solide. Ce logement est destiné à être recouvert par un laser. Le logement et une paroi inférieure du laser forment ensemble l'enveloppe enfermant un gaz ou le vide. La couche de matériau solide peut être le substrat dans lequel est intégré le coupleur.

L'invention concerne donc notamment un élément de couplage optique comprenant un laser, et une couche en matériau solide dans laquelle est intégré le coupleur optique selon l'invention, l'élément externe du coupleur étant constitué d'une enveloppe enfermant un gaz ou le vide, et l'enveloppe étant formée par le logement, et par une paroi inférieure du laser recouvrant le logement.

L'enveloppe peut enfermer uniquement le vide ou un gaz, ou elle peut enfermer également des plots constitués d'un matériau solide. Ces plots peuvent être agencés seulement localement. Ils permettent d'améliorer une conductivité thermique, comme détaillé dans la suite. Lorsque l'élément externe comprend des plots entourés par du vide ou un gaz tel que l'air, on peut considérer qu'il forme un matériau poreux.

Le coupleur optique se compose avantageusement de trois tranches s'étendant l'une à la suite de l'autre, comprenant :

- une première tranche, destinée à se trouver sous le laser à l'exception d'une région de sortie du laser, et constituée par au moins une partie de la base de l'élément externe ;
- une deuxième tranche, directement adjacente à la première tranche, destinée à se trouver sous ladite région de sortie du laser, et comprenant une extrémité de l'élément central ; et
- une troisième tranche, directement adjacente à la deuxième tranche.

Le coupleur optique est avantageusement destiné à coupler optiquement un laser et un guide d'onde, de sorte que l'indice optique de la première tranche est inférieur à l'indice effectif du laser, et l'indice optique de l'élément intermédiaire est supérieur à l'indice effectif du laser.

Le matériau de la première tranche consiste par exemple en une matrice de silice dans laquelle sont intégrés des plots contenant du germanium et du silicium.

En variante, le matériau de la première tranche consiste en des plots contenant du germanium et du silicium, entourés par du vide ou un gaz tel que l'air.

Le coupleur optique est avantageusement destiné à coupler optiquement un laser et un guide d'onde, de sorte que :

- l'indice effectif dans la deuxième tranche croît progressivement depuis l'entrée jusqu'à la sortie de la deuxième tranche, depuis une face adjacente à la première tranche jusqu'à une face adjacente à la troisième tranche ;
- l'indice effectif en entrée de la deuxième tranche est inférieur à l'indice effectif du laser ; et
- l'indice effectif en sortie de la deuxième tranche est supérieur à l'indice effectif du laser.

Le coupleur optique est encore avantageusement destiné à coupler optiquement un laser et un guide d'onde, de sorte que :

- une région du coupleur optique, de même largeur que celui-ci, située sous l'élément central et au contact direct de sa face inférieure, définit une gaine inférieure du coupleur ;
- une région du coupleur optique, de même largeur que celui-ci, située sur l'élément central et au contact direct de sa face supérieure, définit une gaine supérieure du coupleur; et
- en sortie de la deuxième tranche, l'indice optique équivalent de la gaine inférieure du coupleur et l'indice optique équivalent de la gaine supérieure du coupleur sont chacun inférieurs à l'indice effectif du laser.

Le coupleur optique est encore avantageusement destiné à coupler optiquement un laser et un guide d'onde, de sorte que :

- une région du coupleur optique, de même largeur que celui-ci, située sous l'élément central et au contact direct sa face inférieure, définit une gaine inférieure du coupleur ; et
- l'épaisseur de la gaine inférieure du coupleur est supérieure ou égale à $\lambda_0/2$, où $\lambda_0$ est la longueur d'onde d'émission du laser dans le vide.

Le coupleur optique est encore avantageusement destiné à coupler optiquement un laser et un guide d'onde, de sorte que l'indice effectif dans la troisième tranche croît progressivement depuis l'entrée vers la sortie de la troisième tranche, jusqu'à atteindre la valeur de l'indice effectif du guide d'onde.

Le coupleur optique peut être en particulier destiné à coupler optiquement un laser à cascade quantique et un guide d'onde.

L'invention concerne également un procédé de fabrication d'un coupleur optique tel qu'exposé ci-dessus, ledit procédé comprenant les étapes suivantes :

- dépôt, sur un substrat, d'une première couche destinée à former l'élément central, et gravure de la première couche ;
- dépôt d'une deuxième couche, recouvrant la première couche gravée, et planarisation de la deuxième couche ;
- gravure de la première couche au moins, pour former un logement encadrant une extrémité de la première couche gravée ;
- éventuel remplissage du logement, pour former l'élément externe du coupleur optique.

L'invention concerne enfin un système optique de guidage intégré sur un substrat, caractérisé en ce qu'il comprend :

- un coupleur optique tel qu'exposé ci-dessus ;
- un guide d'onde, situé dans le prolongement du coupleur optique de sorte qu'un coeur dudit guide d'onde s'étend dans le prolongement de l'élément central et est formé d'un même matériau, et une gaine dudit guide d'onde s'étend dans le prolongement de l'élément intermédiaire et est formée d'un même matériau ; et
- un laser, situé au-dessus d'au moins une partie du coupleur optique ;

le coupleur optique étant adapté à coupler optiquement ledit laser et ledit guide d'onde.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de manière schématique un système comprenant un coupleur optique selon l'art antérieur ;
- les figures 2A à 2C illustrent de manière schématique un premier mode de réalisation de système comprenant un coupleur optique selon l'invention ;
- les figures 3A et 3B illustrent le coupleur optique tel que représenté sur les figures 2A à 2C ;
- les figures 4A et 4B illustrent de manière schématique un deuxième mode de réalisation de système comprenant un coupleur optique selon l'invention ;
- la figure 5 illustre le couplage optique réalisé par un coupleur optique selon l'invention ; et
- la figure 6 illustre un exemple de procédé de fabrication d'un coupleur optique selon l'invention.

## EXPOSÉ DÉTAILLÉ DE MODES DE RÉALISATION PARTICULIERS

On va tout d'abord illustrer un premier mode de réalisation de système optique de guidage 1000, intégré sur un substrat, et comprenant un coupleur optique selon l'invention.

Le coupleur selon l'invention est adapté en particulier à coupler un laser émettant à une longueur d'onde comprise entre 2 et 10 $\mu$m, et un guide d'onde intégré sur un substrat en silicium.

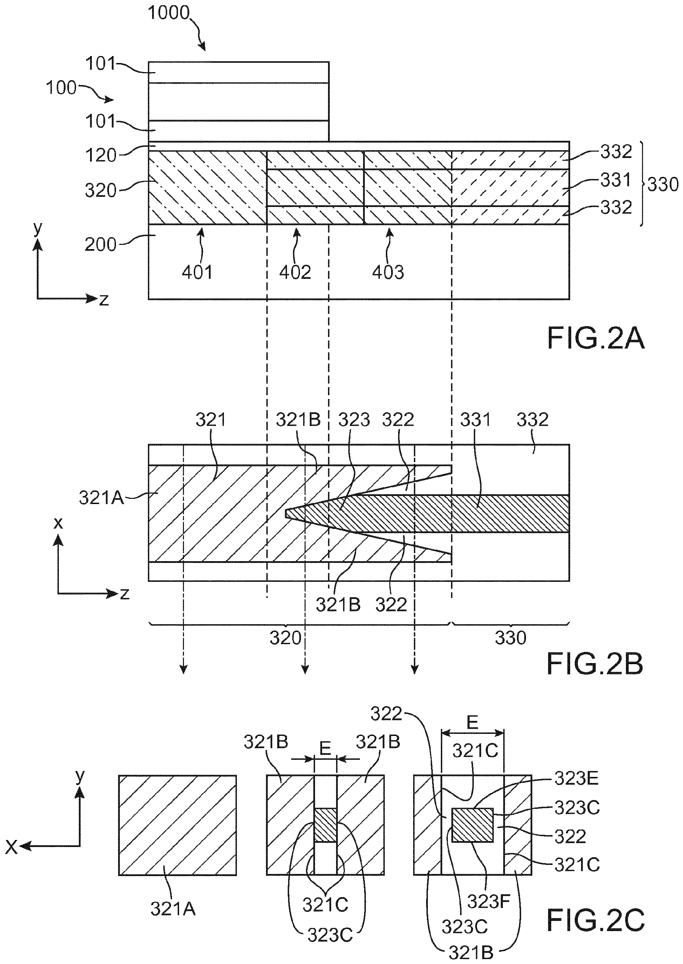

Soit un repère orthonormé (Oxyz), la figure 2A est une vue de côté, dans le plan (zOy), la figure 2B est une vue en coupe dans un plan parallèle au plan (zOx) et passant par le centre du coupleur optique, et la figure 2C correspond à trois vues en coupe dans des plans parallèles au plan (xOy) et pour différentes valeurs de z. L'axe (Oz) correspond à des longueurs, et s'étend parallèle à la direction de propagation d'un faisceau lumineux dans le guide d'onde tel que décrit dans la suite. L'axe (Oy) correspond à des hauteurs, et s'étend parallèle à une direction d'empilement du laser sur le substrat tels que décrits dans la suite. L'axe (Ox) correspond à des largeurs.

Le système optique de guidage 1000 comprend un laser 100 émettant dans le moyen infrarouge, par exemple à une longueur d'onde comprise entre 2 et 10 $\mu$m, en particulier entre 3 et 10 $\mu$m et plus particulièrement entre 4 et 10 $\mu$m.

Le laser 100 est ici un laser III-V, formé par un guide d'onde actif. La gaine 101 de ce guide actif est en phosphure d'indium (InP). Le laser 100 est de préférence un laser à cascade quantique, ou QCL, dans lequel des puits quantiques permettent l'émission de photons dans l'infrarouge moyen, à partir d'une excitation par des électrons. Le laser 100 est réalisé sur le dessus d'un substrat dans lequel sont intégrés un guide d'onde et un coupleur optique selon l'invention. Le laser est réalisé en particulier au-dessus d'au moins une partie du coupleur optique selon l'invention.

Le substrat 200 peut être en verre, en silicium, en matériau III-V tel que l'InP. Il s'agit de préférence d'un substrat en silicium, le silicium permettant de co-intégrer efficacement des éléments optiques et électroniques.

Le système optique de guidage 1000, comprend un guide d'onde 330, formant un guide passif, dans le substrat. Dans toute la suite, le terme « guide d'onde » désigne le guide d'onde passif 330. Le guide d'onde 330 est adapté à propager un faisceau lumineux à une longueur d'onde supérieure à 2 $\mu$m, sans absorption. Dans la suite, tous les indices effectifs et indices optiques désignent des indices de réfraction dans le moyen infrarouge.

Dans tout le texte, on considère qu'une propagation sans absorption correspond à une absorption inférieure à 1dB/cm.

Pour rappel, l'indice effectif d'un mode, notamment l'indice effectif du mode d'un guide d'onde, est défini de la façon suivante :

$$n_{eff} = \beta * \frac{\lambda}{2\pi}$$

où $n_{eff}$ est l'indice effectif du mode considéré, $\lambda$ la longueur d'onde du faisceau lumineux se propageant dans ce milieu, et $\beta$ la constante de phase de ce milieu. La constante de phase $\beta$ dépend de la longueur d'onde et du mode du faisceau lumineux se propageant dans ce milieu, ainsi que des propriétés de ce milieu (en particulier indices et géométrie). La constante de phase $\beta$ est définie par :

$$A(z) = A(0)\exp(\gamma z)$$

où A(z) est l'amplitude complexe en fonction de z d'un faisceau lumineux se propageant dans un milieu tel qu'un guide d'onde, et $\beta$ est la partie imaginaire de $\gamma$.

Dans tout le texte, le terme « indice effectif » désigne l'indice effectif du mode fondamental du faisceau lumineux se propageant dans ce milieu, à la longueur d'onde centrale de ce faisceau lumineux. Le mode fondamental est le mode d'ordre zéro, généralement quasi-gaussien.

On peut parfois considérer que l'indice effectif désigne l'indice optique moyen du milieu tel qu'il est « vu » par un mode du faisceau lumineux se propageant dans ce milieu. Pour faciliter la compréhension, on utilise une telle image dans les explications qui suivront, sans préjudice de la définition rigoureuse donnée ci-dessus.

Dans le guide d'onde, le mode fondamental s'étend principalement dans le coeur, sur lequel il est centré, et déborde également sur la gaine, de sorte que l'indice effectif du mode dans le guide d'onde est une valeur intermédiaire entre l'indice du coeur et l'indice de la gaine.

Pour ne pas être absorbant à des longueurs d'onde comprises entre 2 et 10 $\mu$m, le guide d'onde 330 ne contient pas de silice. Il s'agit de préférence d'un guide d'onde présentant un coeur 331 en germanium ou en un alliage de germanium et de silicium, et une gaine 332 en silicium ou en un alliage de germanium et de silicium. Les matériaux du coeur 331 et de la gaine 332 sont choisis de sorte que l'indice optique du coeur 331 soit supérieur à l'indice optique de la gaine 332. L'indice optique du silicium vaut environ 3,4. L'indice optique du Silicium-germanium avec 40% de Germanium vaut environ 3,6. Ainsi, l'indice effectif dans le guide d'onde est supérieur à 3,4, par exemple de l'ordre de 3,5.

Le silicium et le germanium, ainsi que les alliages comprenant ces deux éléments, sont parfaitement compatibles avec les procédés connus de fabrication par épitaxie.

De préférence, la gaine 332 est formée entièrement par le matériau du substrat.

Le guide d'onde 330 est situé dans le prolongement d'un coupleur optique 320, intégré lui aussi dans le substrat. Sur la figure 2A, le guide d'onde 330 est représenté en hachures pointillées et le coupleur optique 320 est représenté en hachures en trait mixte.

Le coupleur optique présente de préférence une forme de parallélépipède rectangle, de même largeur que le laser. Il est destiné à se trouver en partie sous le coeur du laser.

Le coupleur optique 320 comprend :

- un élément externe 321, représenté en hachures larges sur les figures 2B et 2C ;
- un élément intermédiaire 322 ; et
- un élément central 323, représenté en hachures fines sur les figures 2B et 2C.

L'élément externe 321 est réalisé à partir d'un premier matériau, dit matériau de bas indice. On donnera dans la suite plus de détails sur l'indice optique de l'élément externe 321. La longueur de l'élément externe définit la longueur du coupleur optique selon l'invention.

L'élément externe 321 présente une base 321A, à partir de laquelle s'étendent deux bras 321B. La base présente en particulier une forme de parallélépipède rectangle. En figure 2C, à gauche, est représentée une vue en coupe du coupleur optique, dans un plan passant par cette base. La base est destinée à se trouver entièrement sous le laser 100.

On nomme « encoche » l'espace entre les deux bras 321B. L'encoche est délimitée latéralement par deux premières parois 321C appartenant chacune à l'un des bras 321B. Chaque première paroi est définie par une génératrice, s'étendant dans un plan parallèle au plan (zOx), et par une hauteur.

Les deux premières parois 321C s'écartent progressivement l'une de l'autre, au fur et à mesure que l'on s'éloigne du fond de l'encoche. En figure 2C, au centre, on a représenté une vue en coupe du coupleur optique, dans un plan passant par cette encoche, à proximité du fond de l'encoche. En figure 2C, à droite, on a représenté une vue en coupe du coupleur optique, dans un plan passant par cette encoche, à proximité de l'entrée de l'encoche. On observe bien que l'écartement E entre les deux premières parois croît au fur et à mesure que l'on s'éloigne du fond de l'encoche, cet écartement étant défini selon l'axe (Ox).

Dans l'exemple représenté sur les figures 2A à 2C, les premières parois 321C sont planes, et l'écartement entre celles-ci croît linéairement. Les premières parois 321C peuvent cependant présenter toute autre forme non plane, telle que l'écartement entre les premières parois soit monotone croissant.

De préférence, les deux bras sont symétriques relativement à un plan parallèle au plan (xOy) et passant par le fond de l'encoche.

L'élément central 323 se trouve à l'intérieur de l'encoche. Il est réalisé dans un deuxième matériau identique au matériau du coeur 331 du guide d'onde. Il est délimité latéralement par deux deuxièmes parois 323C. Chaque deuxième paroi est définie par une génératrice, s'étendant dans un plan parallèle au plan (zOx), et par une hauteur.

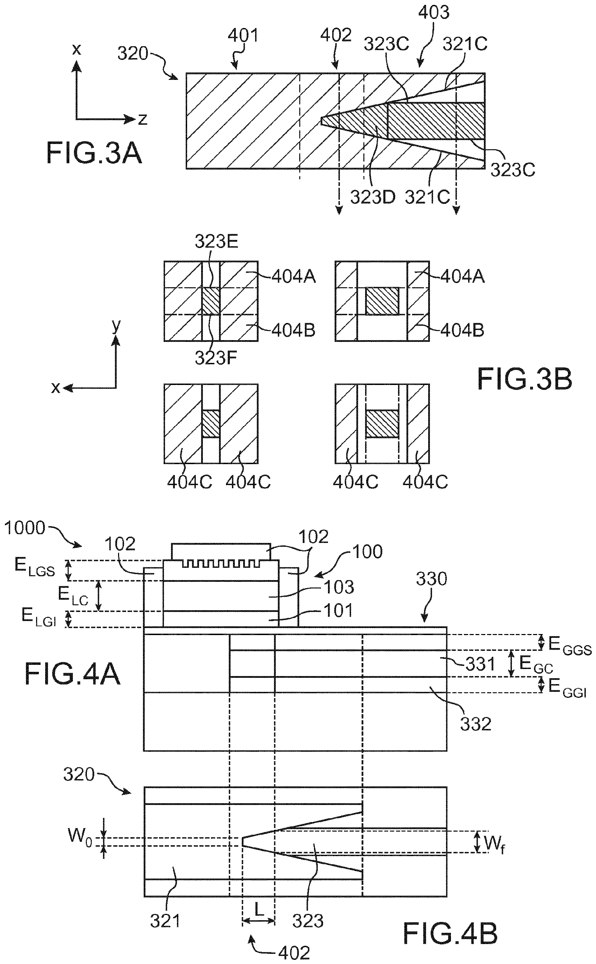

Dans une première région 323D (voir figure 3A), les deux deuxièmes parois 323C présentent un écartement décroissant au fur et à mesure que l'on s'approche du fond de l'encoche. Là-encore, l'écartement correspond à une dimension selon l'axe (Ox). Dans cette première région 323D, les deux deuxièmes parois 323C sont également en contact direct avec les deux premières parois 321C, jusqu'au fond de l'encoche. L'élément central 323 est donc affiné du côté du fond de l'encoche, et entouré latéralement par l'élément externe 321, puis s'élargit progressivement de sorte que l'élément externe 321 laisse progressivement la place à l'élément central 323. Dans la première région 323D, l'élément central 323 remplit entièrement l'encoche, entre une première hauteur et une deuxième hauteur dans l'encoche.

Dans la première région 323D, la forme de chaque deuxième paroi 321C correspond par conséquent à la forme de la première paroi avec laquelle elle est en contact direct. Ainsi, l'écartement entre les deuxièmes parois 323C est monotone croissant dans la première région 323D, et croît par exemple linéairement.

En figure 2C, au centre, on a représenté une vue en coupe du coupleur optique, dans un plan passant par cette région 323D. Chaque paroi 323C est en contact direct avec une paroi 321C. En figure 2C, à droite, on a représenté une vue en coupe du coupleur optique, dans un plan passant en dehors de cette région 323D. Comme détaillé dans la suite, une partie de l'élément intermédiaire 322 est intercalée entre une paroi 323C et une paroi 321C.

En dehors de la région 323D, les deuxièmes parois 323C présentent de préférence un écartement constant entre elles. En sortie du coupleur optique, l'élément central 323 se confond avec le coeur 331 du guide d'onde 330. Ainsi, en sortie du coupleur optique, l'écartement entre les deuxièmes parois 323C est égal à la largeur du coeur 331 du guide d'onde 330. En d'autres termes, en sortie du coupleur optique, le coeur du guide d'onde s'étend dans le prolongement de l'élément central.

De préférence, les deux deuxièmes parois 323C sont symétriques relativement à un plan parallèle au plan (xOy) et passant par le fond de l'encoche.

L'élément intermédiaire 322 est formé d'un troisième matériau identique au matériau formant la gaine 332 du guide d'onde. L'élément intermédiaire 322 est de préférence en silicium, comme le substrat. L'élément intermédiaire 322 s'étend de chaque côté de l'élément central 323, directement entre une première paroi 321C et une deuxième paroi 323C. L'élément intermédiaire s'étend en dehors de la région 323D.

En sortie du coupleur optique, l'élément intermédiaire 322 se confond avec la gaine 332 du guide d'onde 330. Ainsi, en sortie du coupleur optique, la gaine du guide d'onde s'étend dans le prolongement de l'élément intermédiaire.

L'indice optique de l'élément central 323 est supérieur à l'indice optique de l'élément intermédiaire 322, lui-même supérieur à l'indice optique des bras de l'élément externe 321.

L'indice optique de l'élément externe 321 est par exemple inférieur à 2, voire même inférieur à 1,5. Il peut être inférieur à la moitié de l'indice optique de l'élément central 323.

Pour cela, l'élément externe peut être en nitrure d'aluminium (AIN), qui est peu absorbant à des longueurs d'onde supérieures à 2 $\mu$m, et présente en outre l'avantage d'être un excellent conducteur thermique.

En variante, l'élément externe est en silice. La silice est absorbante à des longueurs d'onde supérieures à 2 $\mu$m, mais cette absorption peut être tolérée puisque la longueur de l'élément externe est faible (ce qui n'est pas le cas du guide d'onde qui, lui, ne doit pas contenir de silice). En outre, la portion de l'élément externe destinée à être située sous le laser est partiellement isolée du coeur du laser par la gaine inférieure du laser, qui rend le laser moins sensible à l'absorption par la silice.

En variante encore, l'élément externe peut être en oxyde d'aluminium ($Al_2O_3$).

Selon une autre variante, l'élément externe est constitué d'air, ou même de vide. Il est délimité par les parois d'un logement formé dans le matériau du substrat, et par une paroi inférieure du laser 100 qui ferme le logement.

L'élément central 323 et l'élément intermédiaire 322 du coupleur sont formés des mêmes matériaux que le coeur, respectivement la gaine du guide d'onde 330. Ils participent ensemble au couplage vers le guide d'onde 330, ce guide d'onde étant adapté à propager sans absorption un faisceau lumineux à une longueur d'onde comprise entre 2 et 10 $\mu$m.

Les variations de largeur de l'élément central 323, l'élément intermédiaire 322 et l'élément externe 321 sont progressives. De ce fait, on réalise une variation progressive de l'indice effectif du coupleur optique, permettant une transition de mode adiabatique du laser 100 vers le guide d'onde 330, à une longueur d'onde comprise entre 2 et 10 $\mu$m. Cette transition de mode du laser désigne le transfert dans le guide d'onde, d'au moins une partie de la puissance du mode fondamental du laser vers le mode d'ordre 0 du guide d'onde, généralement le mode quasi-gaussien d'ordre 0.

La base de l'élément externe 321 est adaptée à être placée sous au moins une partie du laser. La base de l'élément externe 321 présente un indice optique inférieur à celui de l'élément intermédiaire 322.

En particulier, et comme détaillé dans la suite, l'indice optique de l'élément intermédiaire 322 est supérieur à l'indice effectif du laser, et l'indice optique de la base de l'élément externe est inférieur à ce même indice effectif. Ainsi, lorsque le substrat présente un indice optique supérieur à l'indice effectif du laser, la base de l'élément externe, destinée à être placée entre le laser et le substrat, évite des pertes par fuite optique du laser vers le substrat. On peut remarquer que l'élément intermédiaire est avantageusement formé dans le matériau du substrat. Dans ce cas, si le substrat présente un indice optique supérieur à l'indice effectif du laser, alors l'indice optique de l'élément intermédiaire est supérieur à l'indice effectif du laser.

En pratique, un laser émettant à une longueur d'onde comprise entre 2 et 10 $\mu$m présente généralement un indice effectif inférieur à l'indice optique de la gaine d'un guide d'onde adapté à propager le mode principal d'un faisceau émis par un tel laser. L'élément intermédiaire 322 étant formé du même matériau que la gaine du guide d'onde 330, le laser présente alors un indice effectif inférieur à l'indice optique de l'élément intermédiaire. L'élément externe 321 est donc nécessaire pour faire en sorte qu'un élément d'indice optique inférieur à l'indice effectif du laser, se trouve sous le laser.

L'indice optique de l'élément intermédiaire 322 est supérieur à l'indice effectif du laser. Si à l'emplacement de l'élément externe se trouvait le matériau de l'élément intermédiaire, il y aurait une fuite optique du laser vers le substrat, sans couplage vers le guide d'onde. La présence de l'élément externe, et notamment sa base, est donc essentielle. Les bras de l'élément externe permettent une transition de mode adiabatique du laser vers le guide d'onde, même en présence de cette base de l'élément externe. Ces bras permettent d'initier le couplage optique entre le laser et le guide d'onde. Ils se trouvent au moins en partie dans une zone d'initiation du couplage optique, sous le laser.

Le coupleur optique selon l'invention permet donc de coupler optiquement un laser et un guide d'onde, même dans le cas où le substrat et le guide d'onde ne le permettent *a priori* pas. Le coupleur permet notamment de coupler un laser émettant à une longueur d'onde centrale comprise entre 2 et 10 $\mu$m et présentant un indice effectif inférieur à 3,3, et un guide d'onde dont la gaine présente un indice supérieur à 3,3, notamment lorsque le substrat est en silicium.

On peut considérer que le coupleur selon l'invention présente une double pointe, une première pointe correspondant à l'extrémité affinée de l'élément central, et une deuxième pointe correspondant à l'extrémité affinée de l'élément intermédiaire, la deuxième pointe étant enfilée autour de la première pointe.

Dans le mode de réalisation avantageux tel que représenté sur les figures 2A à 2C, l'élément intermédiaire 322 s'étend également entre les bras de l'élément externe 321, au-dessus et au-dessous de l'élément central 323. En d'autres termes, l'élément intermédiaire 322 s'étend également au contact direct d'une face supérieure 323E de l'élément central, du côté du substrat recevant le laser, et au contact direct d'une face inférieure 323F de l'élément central, opposée au côté du substrat recevant le laser. Ces contacts directs s'étendent sur toute la face supérieure et la face inférieure de l'élément central. L'élément externe 321 présente une hauteur supérieure à celle de l'élément central 323, l'élément central est centré en hauteur à l'intérieur de l'élément externe, et l'élément intermédiaire 322 et l'élément central 323 remplissent ensemble l'intégralité de l'encoche formée dans l'élément externe 321.

On va maintenant présenter en détail, et en référence aux figures 3A et 3B, différentes relations pouvant exister entre les indices optiques dans le coupleur optique, dans le laser et dans le guide d'onde.

La figure 3A est une vue de détail de la figure 2B, représentant le coupleur optique seul. Les deux figures de gauche de la figure 3B correspondent à la figure centrale de la figure 2C. Les deux figures de droite de la figure 3B correspondent à la figure de droite de la figure 2C.

On définit trois tranches dans le coupleur optique, les différentes tranches étant parallèles entre elles et parallèles au plan (xOy).

Une première tranche 401 est destinée à se trouver sous le laser 100, à l'exception d'une région de sortie du laser (voir figure 2A). La région de sortie du laser est située sur une face inférieure du laser, collée sur le substrat. Cette région de sortie est située du côté d'une extrémité du laser, considéré dans le sens de la longueur. De préférence, le laser 100 présente une forme de parallélépipède rectangle, et la région de sortie est un rectangle s'étendant sur toute la largeur du laser, à une extrémité de celui-ci. La région de sortie du laser est située du côté du guide d'onde.

La région de sortie du laser correspond de préférence à moins de 30% de la surface inférieure du laser.

La première tranche 401 est formée dans la base 321A de l'élément externe. De préférence, la première tranche 401 et la base 321A sont confondues. La première tranche est avantageusement constituée du même matériau que les bras de l'élément externe 321, par exemple du nitrure d'aluminium (AIN) ou de la silice (SiO$_2$).

En variante, la première tranche est formée par de la silice, dans laquelle sont formés des plots contenant du germanium et du silicium. Pour éviter tout phénomène de diffraction, ces plots présentent une largeur maximale inférieure à $\lambda/4$, où $\lambda$ est la longueur d'onde centrale d'émission du laser. Ces plots peuvent être répartis selon un maillage périodique, de périodicité inférieure à $\lambda/2$. Ces plots sont formés en conservant par endroits, lors de la fabrication d'un système de guidage optique selon l'invention, une partie de l'empilement de couches formant le guide d'onde. Chaque plot correspond donc à un empilement du matériau de gaine, du matériau de coeur, et du matériau de gaine du guide d'onde, par exemple par un empilement de silicium, alliage silicium et germanium, et silicium. Les plots permettent d'améliorer la conductivité thermique de la première tranche 401. On évite ainsi l'échauffement du laser qui pourrait nuire à son fonctionnement. De préférence, le reste de l'élément externe est en silicium pur.

Selon une autre variante, la première tranche est formée par une enveloppe remplie par du vide ou un gaz tel que de l'air, et par de tels plots.

L'indice optique de la première tranche 401 est inférieur à l'indice effectif du laser, et l'indice optique du substrat est supérieur à l'indice effectif du laser. Ainsi, la première tranche 401, intercalée entre le laser et le substrat, évite une fuite optique du laser vers le substrat, sans couplage vers le guide d'onde. Cette première tranche 401 forme donc une zone d'isolement optique entre le laser et le substrat. Par exemple, l'indice optique du substrat vaut 3,4 lorsque ce substrat est du silicium, et l'indice effectif du laser vaut 3,2. Dans tout le texte, un indice optique pourra être nommé simplement « indice ».

En outre, l'indice optique de l'élément intermédiaire est supérieur à l'indice effectif du laser. Si à l'emplacement de l'élément externe se trouvait le matériau de l'élément intermédiaire, il y aurait une fuite optique du laser vers le substrat, sans couplage vers le guide d'onde. La présence de l'élément externe, et notamment sa base, est donc essentielle.

Lorsque la première tranche 401 est en silice avec des plots comme décrits ci-dessus, l'indice optique moyen dans la première tranche peut être légèrement supérieur à l'indice de la silice, mais reste néanmoins inférieur à l'indice effectif du laser. La différence entre l'indice optique moyen dans la première tranche et l'indice optique dans le restant de l'élément externe est suffisamment faible pour éviter un saut d'indice entraînant des pertes optiques. La différence d'indice est par exemple inférieure à 20%.

Une deuxième tranche 402, directement accolée à la première tranche 401, est destinée à se trouver sous la région de sortie du laser telle que définie ci-avant (voir également figure 2A).

La deuxième tranche 402 comprend au moins une partie de l'élément central et une partie de l'élément externe. La deuxième tranche 402 inclut en particulier l'extrémité affinée de l'élément central, située au contact des premières parois 321C de l'élément externe. Dans l'exemple représenté sur les figures, les deux premières parois 321C de l'élément externe et les deux deuxièmes parois 323C de l'élément central, sont en contact direct sur l'ensemble de la deuxième tranche. Selon une variante non représentée, cette deuxième tranche 402 comprend une portion de l'élément intermédiaire.

La deuxième tranche est à la fois une zone d'isolement, du fait de la présence de l'élément externe, et de couplage optique, du fait de la présence de l'élément central.

En entrée de la deuxième tranche 402, du côté de la première tranche 401, l'indice effectif dans la deuxième tranche est inférieur à l'indice effectif du laser. Dans la deuxième tranche 402, un faisceau provenant du mode principal du laser s'étend sur une certaine surface. Ce faisceau correspond à une portion du mode principal du laser, transférée dans la deuxième tranche. Du côté de la première tranche, cette surface correspond en faible proportion à l'élément central et en grande partie à l'élément externe. Du fait de l'augmentation progressive de la largeur de l'élément central, en s'éloignant de la première tranche, la proportion correspondant à l'élément central augmente et celle correspondant à l'élément externe diminue. Par conséquent, l'indice effectif dans la deuxième tranche croît progressivement, au fur et à mesure que l'on s'éloigne de la première tranche 401. Cet indice effectif augmente jusqu'à atteindre l'indice effectif du laser. Lorsque l'on obtient cette égalité, le couplage entre le laser et le coupleur optique est réalisé. Pour des raisons de robustesse technologique, on préfère que l'indice effectif en sortie de la deuxième tranche soit légèrement supérieur à l'indice effectif du laser, par exemple supérieur de quelques pourcents. Ainsi, le couplage entre le laser et le guide d'onde est réalisé par adaptation d'indice effectif. La deuxième tranche 402 forme ainsi une zone de couplage optique.

Afin d'influencer suffisamment la valeur de l'indice effectif dans la deuxième tranche, l'indice de l'élément externe doit être suffisamment faible relativement à l'indice de l'élément central, typiquement deux fois inférieur.

La progressivité de l'augmentation de l'indice effectif empêche des fuites qui surviendraient en cas de saut d'indice brutal. De préférence, cette augmentation d'indice effectif correspond à un écartement entre les deuxièmes parois 323C qui augmente lentement relativement à la longueur d'onde centrale d'émission du laser. Par exemple les deux deuxièmes parois 321C forment entre elles, dans la région 323D, un angle inférieur à $10^{-3}$rad.

D'autres conditions peuvent être vérifiées. Pour cela, on définit les gaines inférieure, supérieure et latérale du coupleur optique.

La gaine supérieure 404A du coupleur correspond à une région du coupleur optique située au contact direct de la face supérieure 323E de l'élément central, et de même largeur que le coupleur optique. Cette largeur correspond de préférence à la largeur du laser. La gaine supérieure 404A correspond en particulier à une région située au-dessus de l'élément central, et délimitée par une paroi de même largeur que le coupleur et de même génératrice que l'une des deuxièmes parois 323C de l'élément central. La gaine supérieure 404A comprend une partie de l'élément externe, à ses deux extrémités. Au milieu se trouve de préférence le matériau de l'élément intermédiaire. La longueur de la gaine supérieure correspond à la longueur de l'élément central.

On définit de manière similaire la gaine inférieure 404B du coupleur, située au contact direct de la face inférieure 323F de l'élément central.

On définit également des gaines latérales 404C, de même hauteur que le coupleur, et chacune au contact direct d'une paroi latérale de l'élément central. Dans la région 323D, les gaines latérales sont formées entièrement dans l'élément externe. En dehors de cette région, les gaines latérales sont formées dans l'élément externe et l'élément intermédiaire. Dans l'exemple illustré sur les figures, dans la deuxième tranche, les gaines latérales sont formées entièrement dans l'élément externe.

Sur la figure 3B, les deux figures en haut illustrent les gaines supérieure et inférieure du coupleur, et les deux figures en bas illustrent les gaines latérales du coupleur.

Au fur et à mesure que l'on s'éloigne de la première tranche 401, la proportion de l'élément externe dans la gaine inférieure 404B décroît. Ainsi, l'indice optique équivalent de la gaine inférieure augmente. L'indice optique équivalent d'un milieu désigne son indice optique moyen, c'est-à-dire la moyenne des indices des zones formant ce milieu, pondérés par les volumes de ces zones, où chaque zone correspond à un matériau de nature différente. Or, partout sous le laser 100, l'indice optique équivalent de la gaine inférieure 404B est avantageusement inférieur à l'indice effectif du laser. Pour cela, la deuxième tranche 402 doit être agencée de sorte qu'en sortie de celle-ci, l'indice optique équivalent de la gaine inférieure 404B soit inférieur à l'indice effectif du laser. On évite ainsi que le mode principal du laser traverse la gaine inférieure 404B, sans couplage dans le coupleur optique. En d'autres termes, on évite que ce mode du laser fuie directement dans le substrat. De préférence, la gaine supérieure 404A vérifie cette même condition.

A la figure 3B, les gaines supérieure et inférieure sont formées par de l'AlN sur les côtés et du silicium au centre. Sur les deux figures de gauche, ces gaines présentent un indice optique équivalent de 3,1. Sur les deux figures de droite, ces gaines présentent un indice optique équivalent de 3,2. On illustre ainsi l'augmentation de l'indice optique équivalent des gaines inférieure et supérieure, au fur et à mesure que l'on s'éloigne de la première tranche 401.

En entrée dans la deuxième tranche 402, le faisceau se propageant dans celle-ci (correspondant à une portion du mode fondamental du laser, transféré en entrée de la deuxième tranche) s'étend en partie dans l'élément externe de bas indice. Ainsi, en entrée de la deuxième tranche 402, il se peut que l'indice effectif dans la deuxième tranche soit inférieur à l'indice du substrat. Dans de telles conditions, on évite une fuite optique vers le substrat, grâce à une grande épaisseur (dimension selon l'axe (Oy), également nommée hauteur) de la gaine inférieure 404B. En particulier, la gaine inférieure 404B présente une épaisseur supérieure ou égale à $\lambda_0/2$, où $\lambda_0$ est la longueur d'onde d'émission du laser dans le vide. La gaine inférieure 404B du coupleur réalise donc une isolation optique entre le coupleur et le substrat. La deuxième tranche 402 forme ainsi une zone d'isolement optique.

La deuxième tranche présente de préférence une longueur inférieure à 5mm. Ainsi, une mauvaise conductivité thermique du matériau de l'élément externe n'est pas problématique.

Une troisième tranche 403 est directement accolée à la deuxième tranche 402, sans aucune partie du laser située au-dessus (voir également figure 2A).

Dans la troisième tranche 403, un faisceau provenant du mode principal du laser s'étend sur une certaine surface. Ce faisceau correspond à une portion du mode principal du laser, transféré dans la deuxième tranche, puis la troisième tranche. Du côté de la deuxième tranche, c'est-à-dire en entrée de la troisième tranche, cette surface s'étend sur une partie de l'élément central, une partie de l'élément externe et le cas échéant une partie de l'élément intermédiaire. Au fur et à mesure que l'on s'éloigne de la deuxième tranche, l'élément externe s'éloigne de l'élément central de sorte que la proportion de l'élément externe dans cette surface décroît, et celle de l'élément intermédiaire (et le cas échéant de l'élément central) augmente. Ainsi, l'indice effectif dans la troisième tranche croît progressivement entre l'entrée et la sortie de la troisième tranche, jusqu'à se rapprocher, et même égaler l'indice effectif du guide d'onde. L'augmentation progressive de l'indice effectif dans la troisième tranche 403 réalise une transformation de mode adiabatique vers le guide d'onde. En d'autres termes, le faisceau provenant du mode principal du laser, transféré dans la deuxième tranche, puis en entrée de la troisième tranche, est progressivement amené en entrée du guide d'onde, sans être soumis à des variations d'indice trop brutales. De préférence, cette augmentation d'indice correspond à un écartement entre les premières parois 321C qui augmente lentement relativement à la longueur d'onde centrale d'émission du laser, soit un angle entre les deux premières parois 321C inférieur à 10⁻³rad.

Lorsque l'indice effectif dans la troisième tranche atteint la valeur de l'indice effectif du guide d'onde, la présence de l'élément externe n'est plus nécessaire. Cette condition permet de définir la longueur de l'élément externe, et donc du coupleur optique selon l'invention.

Ainsi, l'élément externe 321 assure à la fois une isolation optique entre le laser et le substrat, et une adaptation progressive de l'indice effectif dans le coupleur jusqu'à atteindre l'indice effectif du guide d'onde 330.

Dans l'exemple représenté sur les figures, dans la troisième tranche 403, l'élément central finit de s'élargir, et l'élément intermédiaire apparaît peu à peu.

Dans la deuxième tranche 402 puis la troisième tranche 403, le coupleur optique 320 réalise donc un couplage optique du laser 100 vers le guide d'onde 330 et offre une adaptation de mode adiabatique, c'est-à-dire par évolution d'indice progressive de façon à empêcher des pertes par réflexions, diffusion, et transfert vers des modes d'ordre plus élevé.

Le coupleur optique 320 empêche également les fuites optiques du laser vers le substrat.

Les figures 4A et 4B illustrent de manière schématique un deuxième mode de réalisation de système 1000 comprenant un coupleur optique selon l'invention.

La figure 4A correspond à la figure 2A, sur laquelle on a apporté quelques précisions relatives au laser 100. La figure 4B correspond à la figure 2B, sans hachures pour des raisons de lisibilité.

Le laser 100 présente, sur sa face supérieure, une structure en réseau, dite top-DFB pour l'anglais « *distributed feedback* ». Cette structure permet de fixer la longueur d'onde d'émission du laser 100. La face supérieure et les faces latérales du laser sont recouvertes d'un revêtement hautement réfléchissant 102, par exemple métallique, notamment en or. Ainsi, l'émission du laser ne se fait pas par la tranche, mais par la face inférieure, dans la région de sortie telle que définie en référence à la figure 3A.

Les figures 4A et 4B permettent d'illustrer un exemple particulier de système et de coupleur selon l'invention, notamment des dimensions.

Le laser 100 présente les caractéristiques suivantes :

- longueur d'onde centrale d'émission : 4,5 $\mu$m ;
- gaines inférieure et supérieure 101 (et latérale) en InP, d'indice 3,1 ;
- coeur 103 (zone active) en alliage AlInAs et GaInAs, d'indice 3,37 ;
- indice effectif du laser : 3,23 ;
- épaisseur $E_{LC}$ du coeur: 1,5 $\mu$m ;
- épaisseur $E_{LGS}$ de la gaine supérieure : 3 $\mu$m ;
- épaisseur $E_{LGI}$ de la gaine inférieure : 1 $\mu$m (cette épaisseur est de préférence inférieure ou égale à 1 $\mu$m, pour éviter d'isoler entièrement le laser du coupleur, ce qui empêcherait le couplage optique) ;
- largeur du coeur: 4 $\mu$m.

Le guide d'onde 330 présente les caractéristiques suivantes :

- indice de la gaine 332 en silicium : 3,4;
- indice du coeur 331 en alliage silicium (60%) et germanium (40%) : 3,6 ;
- indice effectif du guide d'onde : 3,46
- épaisseur $E_{GC}$ du coeur: 2,5 $\mu$m ;
- épaisseur $E_{GGS}$ de la gaine supérieure : 0,5 $\mu$m ;
- épaisseur $E_{GGI}$ de la gaine inférieure : 2$\mu$m;
- largeur du coeur: 3 $\mu$m.

Le coupleur optique 320 présente les caractéristiques suivantes :

- élément externe 321 en silice, d'indice optique 1,44 ;
- largeur minimale Wo de l'élément central 323 : 0,5 $\mu$m ;
- largeur $W_f$ de l'élément central, en sortie de la deuxième tranche : 1,4 $\mu$m ;
- longueur L de la deuxième tranche 402 : 2000 $\mu$m.

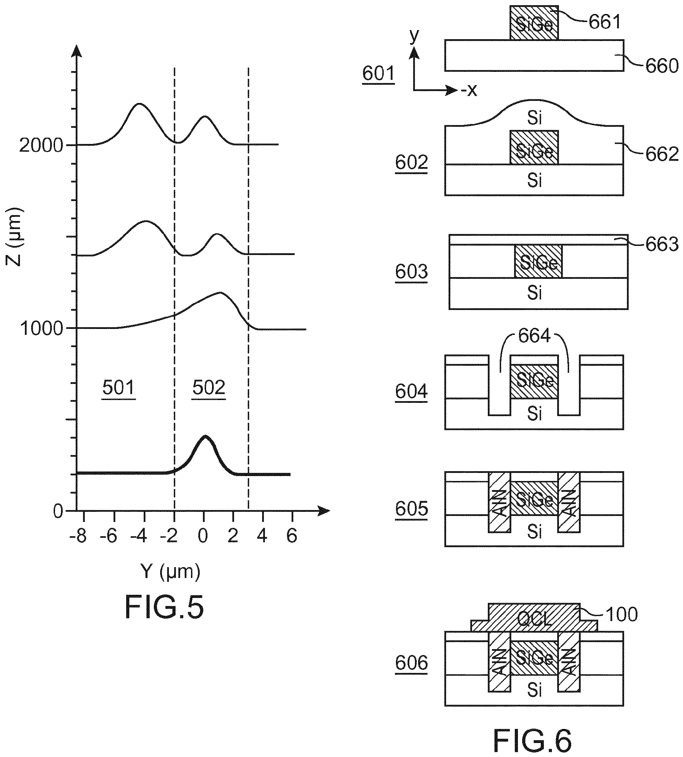

La figure 5 illustre de manière schématique le couplage optique réalisé par un coupleur optique selon l'invention.

La zone 501 correspond au coupleur optique, et la zone 502 correspond au laser disposé au-dessus. L'axe (Oz) s'étend sur toute la longueur de la deuxième tranche. On voit que de l'entrée à la sortie de la deuxième tranche, une partie du mode principal du laser est progressivement couplée dans le coupleur optique. En sortie de la deuxième tranche, la répartition de puissance optique entre le coupleur optique et le laser est par exemple de l'ordre de 50%-50%, par exemple 45%-55%. Ce couplage non total permet de conserver un effet de Fabry-Pérot dans le laser, atteint habituellement grâce à la réflexion partielle de la tranche de sortie du laser. Au final, on transmet par exemple dans le guide d'onde 45% de la puissance optique du laser, grâce au coupleur optique selon l'invention.

On peut montrer que l'efficacité du couplage augmente avec la longueur de la deuxième tranche. Cette efficacité dépend également des largeurs Wo et $W_f$ de l'élément central, définies ci-avant. Ces largeurs déterminent les indices effectifs en entrée et en sortie de la deuxième tranche.

En particulier, si la largeur $W_f$ de l'élément central en sortie de la deuxième tranche est inférieure à une valeur limite, on n'atteint pas la condition selon laquelle l'indice effectif du laser est égal à l'indice effectif en sortie de la deuxième tranche. Dans ce cas, le couplage n'est pas réalisé. La valeur limite inférieure de $W_f$ est environ 1,1 $\mu$m, dans les conditions des figures 4A et 4B.

Lorsque la largeur $W_f$ de l'élément central en sortie de la deuxième tranche augmente, l'indice optique équivalent de la gaine supérieure du coupleur et de la gaine inférieure du coupleur peut dépasser l'indice effectif du laser (car la proportion de l'élément externe dans la gaine supérieure et inférieure est alors très faible). Le mode principal du laser fuit dans le substrat, ce qui diminue l'efficacité du couplage. Une valeur limite supérieure de $W_f$ est d'environ 1,4 $\mu$m, dans les conditions des figures 4A et 4B.

On montre également que la forme des premières parois de l'élément externe influe sur l'efficacité du couplage. Des premières parois dont la génératrice est une courbe de type exponentielle, peuvent par exemple améliorer cette efficacité.

Ainsi, l'invention permet de choisir la valeur du taux de couplage entre le laser et le guide d'onde.

La figure 6 illustre un exemple de procédé de fabrication d'un coupleur optique selon l'invention et un système de guidage optique selon l'invention.

De préférence, le coupleur optique est réalisé en même temps que le guide d'onde dans lequel il est adapté à coupler un faisceau lumineux. Cet exemple correspond au cas particulier dans lequel la gaine du guide d'onde est formée par le matériau du substrat.

Au cours d'une première étape 601, on dépose par épitaxie, sur un substrat en silicium 660, une couche 661 d'un alliage de silicium et de germanium. La couche 661 est ensuite gravée grâce à des étapes de lithographie et gravure, pour définir la forme du coeur du guide d'onde ainsi qu'une ébauche de l'élément central du coupleur. Lors de cette étape, il n'est pas nécessaire de graver l'élément central selon une forme affinée. Une forme de parallélépipède rectangle peut suffire, à ce stade. En variante, on grave directement l'élément central pour lui donner sa forme finale.

A l'étape 602, on dépose par épitaxie une nouvelle couche 662 de silicium, qui recouvre entièrement la portion de la couche 661 subsistant après la gravure. La nouvelle couche 662 subit ensuite une étape de planarisation par polissage mécanique et chimique (CMP, pour « *Chemical Mechanical Polishing* »).

Le cas échéant, on peut, dans une étape 603, déposer par épitaxie une couche supplémentaire 663 de silicium, afin d'augmenter l'épaisseur de silicium au-dessus de la portion de la couche 661 subsistant après la gravure. La couche supplémentaire 663 étant déposée sur une surface plane, elle sera également plane.

A l'étape 604, on grave par lithogravure la couche de silicium 662 et le cas échéant 663, de façon à définir un logement 664 dans lequel s'étendra ensuite l'élément externe du coupleur optique. A cette étape 604, on peut graver également une partie de la couche 661, pour définir la forme affinée de l'élément central. Cette gravure permet ainsi de réaliser l'élément intermédiaire du coupleur optique, qui se trouvera entre le logement gravé et l'élément central du coupleur.

A l'étape 605, le logement est rempli par le matériau de l'élément externe du coupleur, ce qui forme ledit élément externe. L'ensemble est ensuite planarisé par CMP. En variante, le logement est conservé creux. A ce stade, on a donc réalisé le coupleur optique selon l'invention, ainsi que le guide d'onde.

A l'étape 606, on colle l'épitaxie du laser 100 au-dessus du coupleur, par collage moléculaire, grâce à une fine couche de silice d'épaisseur inférieure ou égale à 100 nm, suffisamment épaisse pour réaliser le collage moléculaire, mais suffisamment fine pour limiter les pertes par absorption et permettre le couplage. On peut déposer cette fine couche de silice sur le dessus du coupleur. En variante, l'élément externe du coupleur est en silice, et le collage utilise une fine couche résiduelle de la silice introduite dans le logement à l'étape 605, ainsi qu'une fine couche de silice déposée directement sur le laser. Après collage de l'épitaxie du laser 100, le laser 100 est réalisé (gravure du guide du laser, dépôts contacts et traitements hautement réfléchissants) (voir figure 4B).

Le coupleur optique et le système optique de guidage selon l'invention trouvent des applications particulièrement avantageuses dans le domaine des capteurs de gaz intégrés sur un substrat. De tels capteurs mesurent des longueurs d'ondes d'absorption constituant la signature d'un gaz, ces longueurs d'onde se situant dans le moyen-infrarouge, c'est-à-dire entre 2 et 10 $\mu$m.

Le coupleur optique et le système optique de guidage selon l'invention peuvent également être utilisés dans tout autre domaine de la photonique intégrée sur silicium.

**Revendications**

1. Coupleur optique (320) intégré sur un substrat (200), destiné à coupler optiquement un laser (100) et un guide d'onde (330), **caractérisé en ce qu'**il comprend :

   - un élément externe (321), présentant une base (321A) à partir de laquelle s'étendent deux bras (321B) séparés par une encoche, ladite encoche étant délimitée latéralement par deux premières parois (321C) d'écartement décroissant en direction du fond de l'encoche ;
   - un élément central (323), situé dans l'encoche, délimité latéralement par deux deuxièmes parois (323C), et présentant une première région (323D) où lesdites deux deuxièmes parois sont en contact direct avec lesdites deux premières parois (321C) jusqu'au fond de l'encoche ; et
   - un élément intermédiaire (322), s'étendant entre l'élément externe et l'élément central, directement entre une première paroi (321C) et une deuxième paroi (323C) là où une première paroi n'est pas en contact direct avec une deuxième paroi ;

   l'indice optique de l'élément central (323) étant supérieur à l'indice optique de l'élément intermédiaire (322), lui-même supérieur à l'indice optique de la base de l'élément externe (321).

2. Coupleur optique (320) selon la revendication 1, **caractérisé en ce que** l'élément intermédiaire (322) s'étend également, à l'intérieur de l'encoche, directement sur une face supérieure (323E) et sur une face inférieure (323F) de l'élément central.

3. Coupleur optique (320) selon la revendication 1 ou 2, **caractérisé en ce que** l'élément central (323) est en germanium ou un alliage de germanium et de silicium.

4. Coupleur optique (320) selon l'une quelconque des revendications 1 à 3, **caractérisé en ce que** l'élément intermédiaire (322) est en silicium, ou un alliage de germanium et de silicium.

5. Coupleur optique (320) selon l'une quelconque des revendications 1 à 4, **caractérisé en ce que** l'élément externe (321) comprend de la silice, de l'oxyde d'aluminium ou du nitrure d'aluminium ou un gaz ou du vide.

6. Coupleur optique (320) selon la revendication 5, **caractérisé en ce que** l'élément externe (321) est constitué d'une enveloppe enfermant un gaz ou le vide.

7. Coupleur optique (320) selon l'une quelconque des revendications 1 à 6, **caractérisé en ce qu'**il consiste en trois tranches s'étendant l'une à la suite de l'autre, et comprenant :

   - une première tranche (401), destinée à se trouver sous le laser à l'exception d'une région de sortie du laser, et constituée par au moins une partie de la base (321A) de l'élément externe ;
   - une deuxième tranche (402), directement adjacente à la première tranche, destinée à se trouver sous ladite région de sortie du laser, et comprenant une extrémité de l'élément central (323) ; et
   - une troisième tranche (403), directement adjacente à la deuxième tranche.

8. Coupleur optique (320) selon la revendication 7, **caractérisé en ce qu'**il est destiné à coupler optiquement un laser et un guide d'onde, de sorte que l'indice optique de la première tranche (401) est inférieur à l'indice effectif du laser (100), et l'indice optique de l'élément intermédiaire (322) est supérieur à l'indice effectif du laser (100).

9. Coupleur optique (320) selon la revendication 7 ou 8, **caractérisé en ce que** la première tranche (401) comprend des plots contenant du germanium et du silicium.

10. Coupleur optique (320) selon l'une quelconque des revendications 7 à 9, **caractérisé en ce qu'**il est destiné à coupler optiquement un laser et un guide d'onde, de sorte que :

    - l'indice effectif dans la deuxième tranche (402) croît progressivement depuis l'entrée jusqu'à la sortie de la deuxième tranche, depuis une face adjacente à la première tranche jusqu'à une face adjacente à la troisième tranche ;
    - l'indice effectif en entrée de la deuxième tranche est inférieur à l'indice effectif du laser (100) ; et
    - l'indice effectif en sortie de la deuxième tranche est supérieur à l'indice effectif du laser (100).

11. Coupleur optique (320) selon l'une quelconque des revendications 7 à 10, **caractérisé en ce qu'**il est destiné à coupler optiquement un laser et un guide d'onde, de sorte que :

    - une région du coupleur optique, de même largeur que celui-ci, située sous l'élément central et au contact direct de sa face inférieure (323F), définit une gaine inférieure du coupleur (404B) ;
    - une région du coupleur optique, de même largeur que celui-ci, située sur l'élément central et au contact direct de sa face supérieure (323E), définit une gaine supérieure du coupleur (404A) ; et
    - en sortie de la deuxième tranche (402), l'indice optique équivalent de la gaine inférieure du coupleur et l'indice optique équivalent de la gaine supérieure du coupleur sont chacun inférieurs à l'indice effectif du laser.

12. Coupleur optique (320) selon l'une quelconque des revendications 7 à 11, **caractérisé en ce qu'**il est destiné à coupler optiquement un laser et un guide d'onde, de sorte que :

    - une région du coupleur optique, de même largeur que celui-ci, située sous l'élément central et au contact direct sa face inférieure (323F), définit une gaine inférieure du coupleur (404B) ; et
    - l'épaisseur de la gaine inférieure du coupleur (404B) est supérieure ou égale à $\lambda_0/2$, où $\lambda_0$ est la longueur d'onde d'émission du laser (100) dans le vide.

13. Coupleur optique (320) selon l'une quelconque des revendications 7 à 12, **caractérisé en ce qu'**il est destiné à coupler optiquement un laser et un guide d'onde, de sorte que l'indice effectif dans la troisième tranche (403) croît progressivement depuis l'entrée vers la sortie de la troisième tranche, jusqu'à atteindre la valeur de l'indice effectif du guide d'onde (330).

**14.** Coupleur optique (320) selon l'une quelconque des revendications 1 à 13, **caractérisé en ce qu'**il est destiné à coupler optiquement un laser à cascade quantique (100) et un guide d'onde (330).

**15.** Procédé de fabrication d'un coupleur optique (320) selon l'une quelconque des revendications 1 à 14, **caractérisé en ce qu'**il comprend les étapes suivantes :

- dépôt (601), sur un substrat, d'une première couche (661) destinée à former l'élément central, et gravure de la première couche ;
- dépôt (602) d'une deuxième couche (662), recouvrant la première couche gravée, et planarisation de la deuxième couche ;
- gravure (604) de la première couche au moins, pour former un logement (664) encadrant une extrémité de la première couche gravée (661) ;
- éventuel remplissage (605) du logement, pour former l'élément externe (321) du coupleur optique.

**16.** Système optique de guidage (1000) intégré sur un substrat, **caractérisé en ce qu'**il comprend :

- un coupleur optique (320) selon l'une quelconque des revendications 1 à 14;
- un guide d'onde (330), situé dans le prolongement du coupleur optique de sorte qu'un coeur (331) dudit guide d'onde s'étend dans le prolongement de l'élément central (323) et est formé d'un même matériau, et une gaine (332) dudit guide d'onde s'étend dans le prolongement de l'élément intermédiaire (322) et est formé d'un même matériau ; et
- un laser (100), situé au-dessus d'au moins une partie du coupleur optique ;

le coupleur optique (320) étant adapté à coupler optiquement ledit laser et ledit guide d'onde.

**Patentansprüche**

**1.** Optokoppler (320), integriert auf einem Substrat (200) und dazu bestimmt, einen Laser (100) und einen Wellenleiter (330) optisch zu koppeln, **dadurch gekennzeichnet, dass** er umfasst:

- ein äußeres Element (321) mit einer Basis (321A), von der aus sich zwei durch eine Kerbe getrennte Arme (321 B) erstrecken, wobei die genannte Kerbe seitlich begrenzt ist von zwei ersten Wänden (321 C), deren Abstand in Richtung Kerbengrund abnimmt;
- ein mittleres Element (323), in der Kerbe befindlich und seitlich begrenzt durch zwei zweite Wände (323C), dabei einen ersten Bereich (323D) aufweisend, wo die genannten zwei zweiten Wände bis zu dem Grund der Kerbe direkten Kontakt mit den genannten zwei ersten Wänden (321 C) haben ; und
- ein Zwischenelement (322), das sich zwischen dem äußeren Element und dem mittleren Element erstreckt, direkt zwischen einer ersten Wand (231 C) und einer zweiten Wand (323C), dort, wo eine erste Wand keinen direkten Kontakt mit einer zweiten Wand hat;

wobei ist der Brechungsindex des mittleren Elements (323) größer ist als der Brechungsindex des Zwischenelements (322), der seinerseits größer ist als der Brechungsindex der Basis des äußeren Elements (321).

**2.** Optokoppler (320) nach Anspruch 1, **dadurch gekennzeichnet, dass** das Zwischenelement (322) sich ebenfalls in der Kerbe erstreckt, direkt auf einer Oberseite (323E) und auf einer Unterseite (323F) des mittleren Elements.

**3.** Optokoppler (320) nach Anspruch 1 oder 2, **dadurch gekennzeichnet, dass** das mittlere Element (323) aus Germanium oder einer Legierung aus Germanium und Silicium ist.

**4.** Optokoppler (320) nach einem der Ansprüche 1 bis 3, **dadurch gekennzeichnet, dass** das Zwischenelement (322) aus Silicium oder einer Legierung aus Germanium und Silicium ist.

**5.** Optokoppler (320) nach einem der Ansprüche 1 bis 4, **dadurch gekennzeichnet, dass** das äußere Element (321) Siliziumdioxid, Aluminiumoxid oder Aluminiumnitrid oder ein Gas oder Vakuum umfasst.

**6.** Optokoppler (320) nach Anspruch 5, **dadurch gekennzeichnet, dass** das äußere Element durch eine ein Gas oder Vakuum einschließende Hülle gebildet wird.

**7.** Optokoppler (320) nach einem der Ansprüche 1 bis 6, **dadurch gekennzeichnet, dass** er aus drei aneinandergrenzenden Teilabschnitten besteht, umfassend :

- einen ersten Teilabschnitt (401), dazu bestimmt, sich unter dem Laser zu befinden, mit Ausnahme eines Ausgangsbereichs des Lasers, und gebildet durch wenigstens einen Teil der Basis (321A) des äußeren Elements ;
- einen zweiten Teilabschnitt (402), direkt an den ersten Teilabschnitt angrenzend, dazu bestimmt, sich direkt unter dem genannten Ausgangsbereich des Lasers zu befinden und ein Ende des mittleren Elements (323) umfassend ; und
- einen dritten Teilabschnitt (403), direkt an den zweiten Teilabschnitt angrenzend.

8. Optokoppler (320) nach Anspruch 7, **dadurch gekennzeichnet, dass** er dazu bestimmt ist, einen Laser und einen Wellenleiter optisch so zu koppeln, dass der Brechungsindex des ersten Teilabschnitts (401) niedriger ist als der effektive Index des Lasers (100), und der Brechungsindex des Zwischenelements (322) höher ist als der effektive Index des Lasers (100).

9. Optokoppler (320) nach Anspruch 7 oder 8, **dadurch gekennzeichnet, dass** der erste Teilabschnitt (401) Germanium und Silicium enthaltende Klötzchen umfasst.

10. Optokoppler (320) nach einem der Ansprüche 7 bis 9, **dadurch gekennzeichnet, dass** er dazu bestimmt ist, einen Laser und einen Wellenleiter optisch so zu koppeln :

- dass der effektive Index in dem zweiten Teilabschnitt (402) vom Eingang bis zum Ausgang des zweiten Teilabschnitts progressiv zunimmt, von einer an den ersten Teilabschnitt angrenzenden Seite bis zu einer an den dritten Teilabschnitt angrenzenden Seite ;
- dass der effektive Index am Eingang des zweiten Teilabschnitts niedriger ist als der effektive Index des Lasers (100) ; und
- dass der effektive Index am Ausgang des zweiten Teilabschnitts größer ist als der effektive Index des Lasers (100).

11. Optokoppler (320) nach einem der Ansprüche 7 bis 10, **dadurch gekennzeichnet, dass** er dazu bestimmt ist, einen Laser und einen Wellenleiter optisch so zu koppeln :

- dass ein Bereich des Optokopplers, von gleicher Breite wie dieser, unter dem mittleren Element befindlich und in direktem Kontakt mit seiner Unterseite (323F), eine untere Hülle des Kopplers (404B) definiert;
- dass ein Bereich des Optokopplers, von gleicher Breite wie dieser, unter dem mittleren Element befindlich und in direktem Kontakt mit seiner Oberseite (323E), eine obere Hülle des Kopplers (404A) definiert; und
- dass, am Ausgang des zweiten Teilabschnitts (402), beide, der äquivalente Brechungsindex der unteren Hülle des Kopplers und der äquivalente Brechungsindex der oberen Hülle des Kopplers, kleiner sind als der effektive Index des Lasers.

12. Optokoppler (320) nach einem der Ansprüche 7 bis 11, **dadurch gekennzeichnet, dass** er dazu bestimmt ist, einen Laser und einen Wellenleiter optisch so zu koppeln :

- dass ein Bereich des Optokopplers, von gleicher Breite wie dieser, unter dem mittleren Element befindlich und in direktem Kontakt mit seiner Unterseite (323F), eine untere Hülle des Kopplers (404B) definiert; und
- dass die Dicke der unteren Hülle des Kopplers (404B) größer oder gleich $\lambda_0/2$ ist, wo $\lambda_0$ die Emissionswellenlänge des Lasers (100) im Vakuum ist.

13. Optokoppler (320) nach einem der Ansprüche 7 bis 12, **dadurch gekennzeichnet, dass** er dazu bestimmt ist, einen Laser und einen Wellenleiter optisch so zu koppeln, dass der effektive Index in dem dritten Teilabschnitt (403), vom Eingang bis zum Ausgang des dritten Teilabschnitts, progressiv zunimmt, bis zum Erreichen des Werts des effektiven Index des Wellenleiters (330).

14. Optokoppler (320) nach einem der Ansprüche 1 bis 13, **dadurch gekennzeichnet, dass** er dazu bestimmt ist, einen Quantenkaskadenlaser (100) und einen Wellenleiter (330) optisch zu koppeln.

15. Herstellungsverfahren eines Optokopplers (320) nach einem der Ansprüche 1 bis 14, **dadurch gekennzeichnet, dass** es die folgenden Schritte umfasst:

- Ablagerung (601) einer ersten Schicht (661), dazu bestimmt das mittlere Element zu bilden, auf einem Substrat, und Ätzen der ersten Schicht;
- Ablagerung (602) einer die erste geätzte Schicht überdeckenden zweiten Schicht (662) und Planarisieren der zweiten Schicht;
- Ätzen (604) der ersten Schicht zumindest, um einen ein Ende der ersten geätzten Schicht (661) flankierenden Sitz (664) auszubilden ;
- eventuelles Auffüllen (605) des Sitzes, um das äußere Element (321) des Optokopplers auszubilden.

16. Lichtleitersystem (1000), integriert auf einem Substrat, **dadurch gekennzeichnet, dass** es umfasst:

- einen Optokoppler (320) nach einem der Ansprüche 1 bis 14 ;
- einen Wellenleiter (330), derartig in der Verlängerung des Optokopplers angeordnet, dass ein Kern (331) des genannten Wellenleiters, sich in der Verlängerung des mittleren Elements (323) erstreckt aus einem selben Material besteht, und eine Hülle (332) des genannten Wellenleiters, sich in der Verlängerung des Zwischenelements (322) erstreckt et aus einem selben Material besteht; und

- einen Laser (100), angeordnet auf wenigstens einem Teil des Optokopplers ;

wobei der Optokoppler (320) angepasst ist an die optische Kopplung des genannten Lasers und des genannten Wellenleiters.

## Claims

1. Optical coupler (320) integrated on a substrate (200), designed to optically couple a laser (100) and a waveguide (330), **characterised in that** it comprises:

   - an external element (321), with a base (321A) starting from which two arms (321B) extend separated by a notch, said notch being delimited laterally by two first walls (321C), the distance from one wall to the other decreasing towards the bottom of the notch;
   - a central element (323) located in the notch, delimited laterally by two second walls (323C), and with a first region (323D) in which said two second walls are in direct contact with said two first walls (321C) as far as the bottom of the notch; and
   - an intermediate element (322), extending between the external element and the central element, directly between a first wall (321C) and a second wall (323C) where a first wall is not in direct contact with a second wall;

   the optical index of the central element (323) being greater than the optical index of the intermediate element (322), itself greater than the optical index of the base of the external element (321).

2. Optical coupler (320) according to claim 1, **characterised in that** the intermediate element (322) also extends inside the notch directly on an upper face (323E) and on a lower face (323F) of the central element.

3. Optical coupler (320) according to claim 1 or 2, **characterised in that** the central element (323) is made of germanium or a germanium and silicon alloy.

4. Optical coupler (320) according to any one of claims 1 to 3, **characterised in that** the intermediate element (322) is made of silicon or a germanium and silicon alloy.

5. Optical coupler (320) according to any one of claims 1 to 4, **characterised in that** the external element (321) includes silica, aluminium oxide or aluminium nitride or a gas or a vacuum.

6. Optical coupler (320) according to claim 5, **characterised in that** the external element (321) is composed of an envelope containing a gas or a vacuum.

7. Optical coupler (320) according to any one of claims 1 to 6, **characterised in that** it is composed of three slices extending one after the other and comprising:

   - a first slice (401), designed to be located under the laser except for a laser exit region, and composed of at least part of the base (321A) of the external element;
   - a second slice (402), directly adjacent to the first slice, and designed to be located under said laser exit region, and comprising one end of the central element (323); and
   - a third slice (403), directly adjacent to the second slice.

8. Optical coupler (320) according to claim 7, **characterised in that** it is designed to optically couple a laser and a waveguide, such that the optical index of the first slice (401) is less than the effective index of the laser (100), and the optical index of the intermediate element (322) is higher than the effective index of the laser (100).

9. Optical coupler (320) according to claim 7 or 8, **characterised in that** the first slice (401) comprises pads containing germanium and silicon.

10. Optical coupler (320) according to any one of claims 7 to 9, **characterised in that** it is designed to optically couple a laser and a waveguide such that:

    - the effective index in the second slice (402) progressively increases from the entry to the exit of the second slice, from a face adjacent to the first slice as far as a face adjacent to the third slice;
    - the effective index at the entry to the second slice is less than the effective index of the laser (100); and
    - the effective index at the exit from the second slice is higher than the effective index of the laser (100).

11. Optical coupler (320) according to any one of claims 7 to 10, **characterised in that** it is designed to optically couple a laser and a waveguide such that:

    - a region of the optical coupler with the same width as the optical coupler, located under the central element and in direct contact with its lower face (323F), defines a lower cladding of the coupler (404B);
- a region of the optical coupler with the same width as the optical coupler, located on the central element and in direct contact with its upper face (323E), defines an upper cladding of the coupler (404A); and
- at the exit from the second slice (402), the equivalent optical index of the lower cladding of the coupler and the equivalent optical index of the upper cladding of the coupler are each less than the effective index of the laser.

12. Optical coupler (320) according to any one of claims 7 to 11, **characterised in that** it is designed to optically couple a laser and a waveguide such that:

- a region of the optical coupler with the same width as the optical coupler, located under the central element and in direct contact with its lower face (323F), defines a lower cladding of the coupler (404B); and
- the thickness of the lower cladding of the coupler (404B) is higher than or equal to $\lambda_0/2$, where $\lambda_0$ is the laser emission wavelength (100) in a vacuum.

13. Optical coupler (320) according to any one of claims 7 to 12, **characterised in that** it is designed to optically couple a laser and a waveguide such that the effective index in the third slice (403) progressively increases from the entry to the exit from the third slice until it reaches the value of the effective index of the waveguide (330).

14. Optical coupler (320) according to any one of claims 1 to 13, **characterised in that** it is designed to optically couple a quantum cascade laser (100) and a waveguide (330).

15. Method of manufacturing an optical coupler (320) according to any one of claims 1 to 14, **characterised in that** it includes the following steps:

- deposit (601) on a substrate a first layer (661) that will form the central element, and etch the first layer;
- deposit (602) a second layer (662), covering the etched first layer and planarise the second layer;
- etch (604) at least the first layer to form a recess (664) surrounding one end of the etched first layer (661);
- possibly fill (605) the recess to form the external element (321) of the optical coupler.

16. Optical guidance system (1000) integrated onto a substrate **characterised in that** it comprises:

- an optical coupler (320) according to any one of claims 1 to 14;
- a waveguide (330), located in the extension of the optical coupler such that a core (331) of said waveguide extends in the extension of the central element (323) and is formed from the same material as the central element, and a cladding (332) of said waveguide extends in the extension of the intermediate element (322) and is formed from the same material; as the intermediate element and
- a laser (100), located above at least part of the optical coupler;

the optical coupler (320) being designed to optically couple said laser and said waveguide.

1

2

41

42

43

44

FIG.1A

31

32

33

3

FIG.1B

FIG.2A

FIG.2B

FIG.2C

FIG.3A

FIG.3B

FIG.4A

FIG.4B

FIG.5

FIG.6

**EP 3 001 230 B1**

**Documents brevets cités dans la description**

- US 20040218868 A1